# EUROPEAN PATENT SPECIFICATION

(11) **EP 4 157 746 B1**
(45) Date of publication and mention of the grant of the patent: **14.08.2024**
(21) Application number: 21737141.8
(22) Date of filing: 25.05.2021
(51) Int. Cl.: B65G 7/08, B65D 88/02, B65D 88/12, B65D 88/56, B65D 90/00, B65G 65/23

(54) **TIPPING CONTAINER FOR COLLECTION AND TRANSPORT OF INDUSTRIAL MATERIALS AND PACKAGING METHOD THEREFOR**
KIPPBEHÄLTER ZUM SAMMELN UND TRANSPORTIEREN VON INDUSTRIEMATERIALIEN UND VERPACKUNGSVERFAHREN DAFÜR
CONTENEUR BASCULANT PERMETTANT LA COLLECTE ET LE TRANSPORT DE MATÉRIAUX INDUSTRIELS ET SON PROCÉDÉ D'EMBALLAGE

(30) Priority: 25.05.2020 IT 202000012244
(43) Date of publication of application: 05.04.2023
(73) Proprietor: Solazzi Enrico e Solazzi Gianni S.N.C., 25012 Calvisano (BS) (IT)
(72) Inventor: SOLAZZI, Gianni, 25012 Calvisano (BS) (IT); SOLAZZI, Enrico, 25010 Isorella (BS) (IT)
(74) Representative: Maroscia, Antonio
(86) International application number: PCT/IB2021/054506
(87) International publication number: WO 2021/240351

(56) References cited:
- WO-A1-2007/028194
- CH-A5- 624 636
- DE-A1- 3 912 409
- DE-U1- 202004 004 155

## Description

### Technical field

The present invention generally funds application in the field of means for collection and transport of bulk materials and particularly relates to a tilting container for collection and transport of products and/or industrial processing waste.

The invention also relates to a method for compact packaging of a certain number of tilting containers.

### Background art

Moving containers have been long known in the field of transportable containers, for transport and handling of solid materials derived from industrial processing, possibly containing cooling or washing liquids, from one point to another of a plant.

Generally, the containers intended for this type of use have a substantially prismatic shape, with a bottom wall, at least a pair of vertical side walls and an open top wall to allow loading/unloading of the material to be transported.

Depending on the contents to be transported, the containers may be made of different rigid materials, such as metals, wood, filled plastics, etc., that can withstand the weight of the load and avoid any leakage of contents.

Moreover, the containers must be sized to allow easy loading/unloading of the material and be easily displaceable inside the workplace, possibly using industrial transport means, such as power forklifts.

Nevertheless, for certain types of materials manual unloading from the container may be difficult for an operator, due to excessive weight, poor handleability or displacement hazards.

In view of at least partially obviating this drawback, containers have been long known which are tilted along at least one side thereof to dump its contents more easily and in a relatively safe manner.

GB2091206 discloses a tipping container comprising a case with a rectangular base and two pairs of vertical side walls, in which the case is hinged to a support frame by pivots located on the vertices of one of the long sides.

A short side of the frame has a first lever for actuating a pair of hydraulic cylinders each located on a short side of the frame, which act on the case to tilt it about the pair of pivots.

For easy dumping of the transported material, a second lever is provided proximate to one of the two pivots to control the opening of the vertical wall along the side about which tilting occurs.

Furthermore, one side of the frame has a pair of recesses for housing the forklift of a truck with the purpose of transporting the container to the desired point.

A first drawback of this known solution is that the tipping system of the device is relatively complex and bulky, because it requires two hydraulic cylinders for tilting the case and an additional lever for opening the wall.

NL1027714 discloses a tipping container having a support base coupled to a substantially conical base by means of a pair of guides, in which the vertical wall facing the tilting side is inclined to facilitate the outflow of the contents.

The side of the base opposite to the tilting direction has a lever for unlocking the pair of guides to allow the case to tip over.

One side of the support base has suitable recesses for housing the forklift of a truck to transport the container.

Furthermore, the wheels may be attached to the lower surface of the base to allow an operator to manually move the container.

A first drawback of this known tipping container is that once the guides have been unlocked, the case is free to automatically and uncontrollably tip over.

This entails the risk of suddenly damping the contents, with the danger of causing possible injury to an operator near the container.

A further drawback of this type of container is that it has an excessive total volume as compared with the loading volume of the case, which increases the overall dimensions.

As a result, the above discussed tipping containers are not practical, are relatively bulky and entail a high risk of accidents while they are being tilted. Examples of containers comprising the features defined in the preamble of the attached claim 1 are disclosed in documents DE 3912409, DE 202004004155, WO2007/028194, CH 624636.

### Technical Problem

In view of the prior art, the technical problem addressed by the present invention is to improve the ratio of the total volume to the capacity of a tipping container, while limiting the risks for an operator while it is being tilted.

### Disclosure of the invention

The object of the present invention is to solve the above discussed problem by providing a tipping container for transporting industrial bulk materials that is highly efficient and cost-effective.

A particular object of the present invention is to provide a tipping container as described hereinbefore that has a high load capacity with respect to its total volume and a relatively simple construction.

A further object of the present invention is to provide a tipping container as described hereinbefore, that can be simply manufactured and packaged to be easily shipped to users.

Another object of the present invention is to provide a tipping container as described hereinbefore, that reduces the risk of accidents during tipping and dumping of the material contained therein.

Yet another object of the present invention is to provide a tipping container as described hereinbefore, that requires no particular operator skills during use and handling.

An additional object of the present invention is to provide a tipping container as described hereinbefore that can be easily transported in a work environment.

These and other objects, as more clearly shown hereinafter, are fulfilled by a tipping container for transporting industrial bulk materials, as defined in claim 1, which container comprises an open-top case for receiving the materials, a base designed to support the case, a tipping device for tilting the container about a substantially horizontal axis to empty its contents, and removable attachment means for attaching the base to an industrial lifting and transporting vehicle.

According to a peculiar aspect of the invention, the case is adapted to be removably coupled to the base and has a downwardly tapering prismatic shape designed to allow stacking of a certain number of cases of the same type when separated from their respective bases.

With this combination of characteristics, the container is compact although it has a large capacity.

Furthermore, the containers can be easily stacked one inside the other, allowing less material to be required for packaging, and also simplifying shipping operations.

Advantageously, the bottom wall of the case has a collection chamber defined by a grid for settling and collection of liquid residues. The chamber has a drain connection or union having a gate valve for draining the liquid residues entrained by the materials.

The drain connection projects from the bottom of the rear wall of the case and allows recovery of both liquid and small solid residues accumulated in the collection chamber.

The invention also relates to a method for compact packaging of a certain number of tipping containers as defined in claim 8, which method comprises a first step of separating the cases from the bases of the tipping containers, and a step of stacking the corresponding cases to overlap the respective inclined front walls one on top of the other and form a first compact stack.

Further steps are stacking the corresponding bases to overlap the upper and lower faces and form a second compact stack and of packaging the first and second stacks separately on two pallets or together on a single pallet.

The step of stacking the bases may be preceded by a step of removing the wheels to reduce the height dimension of the second stack, which may be introduced beforehand in the highest case of the first stack of cases before closing the package.

Advantageous embodiments of the invention are obtained in accordance with the dependent claims.

### Brief description of the drawings

Further features and advantages will be more apparent from the detailed description of certain preferred, non-exclusive embodiments of a tipping container for transport of industrial bulk materials according to the invention, which is described as a non-limiting example with the help of the annexed drawings, in which:
FIG. 1 is a top perspective view of a first embodiment of the assembled container of the invention;
FIG. 2 is a bottom perspective view of the container of FIG. 1;
FIG. 3 is a side view of the container of FIG. 1;
FIG. 4 is a rear view of the container of FIG. 1.
FIG. 5 is an exploded side view of the container of FIG. 1;
FIG. 6 is a side view of the container of FIG. 1 during tipping;
FIG. 7 is a top perspective view of a second embodiment of the assembled container of the invention;
FIG. 8 is a top perspective view of the container of FIG 7;
FIG. 9 is a side view of the container of FIG. 7;
FIG. 10 is a rear view of the container of FIG. 7.
FIG. 11 is an exploded side view of the container of FIG. 7;
FIG. 12 is a side view of the container of FIG. 7 during tipping;
FIGS. 13, 14 and 15 are side views of stacks of separate components ready for packaging of multiple containers of the invention.

### Detailed description of a preferred exemplary embodiment

Particularly referring to the figures, there is shown a tipping container for transporting industrial bulk materials, generally designated by numeral 1, which comprises an open-top case 2 for receiving the materials and a base 3 designed to support the case 2.

The container 1 further comprises a tipping device 4 for tilting it about a substantially horizontal axis X to empty its contents, as well as attachment means 5 for removably attaching the base 3 to an industrial lifting and transporting vehicle, not shown.

Conveniently, the case 2 comprises a substantially rectangular bottom wall 6, a pair of side walls 7 and a rear wall 8 which are substantially perpendicular to the bottom wall 6, and a front wall 9 inclined with respect to the bottom wall 6 to facilitate the sliding movement of the materials to be dumped. By way of example, the angle of inclination with respect to the bottom wall may range from 95° to 150° and is preferably about 120°.

Due to this shape of the case 2, while the container 1 is being tipped over, the materials contained therein are conveyed by gravity toward the front wall 9, which will ensure complete dumping of the materials.

This will not require an operator to manually remove any residues on the bottom of the case, for speeding up the dumping operations.

Advantageously, the bottom wall of 6 has a collection chamber defined by a grid, not shown, for settling and collection of liquid residues. The chamber has a drain connection or union 10 having a gate valve for draining the liquid residues entrained by the materials.

The drain connection 10 projects from the bottom of the rear wall 8 of the case 2 and allows recovery of both liquid and small solid residues accumulated in the collection chamber.

As best shown in the figures, the case 2 is adapted to be removably coupled to the base 3, the case 2 has a downwardly tapering prismatic shape designed to allow stacking of a certain number of cases of the same type when separated from their respective bases.

Conveniently, the base 3 comprises a frame 11 with a plan shape substantially corresponding to that of the bottom wall 6, with substantially parallel upper 12 and lower 13 faces.

Also, the frame 11 can be removably coupled to the case 2 via universal connection members.

These connecting members are selected from the group comprising pins, screws and bolts.

With this configuration, a certain number of cases can be easily stacked and stored it is possible to easily stack and store a certain number of cases, thus limiting the space occupied in a work environment.

Furthermore, removable coupling of the case 2 and the base 3 allow only one of these components to be replaced in an event of failure, without having to purchase a new and complete tipping container formed as a single block.

As better described below, this particular aspect of the container 1 also simplifies the operations for manufacturing and packaging the various parts of the container 1, leading to advantages in terms of costs and logistics.

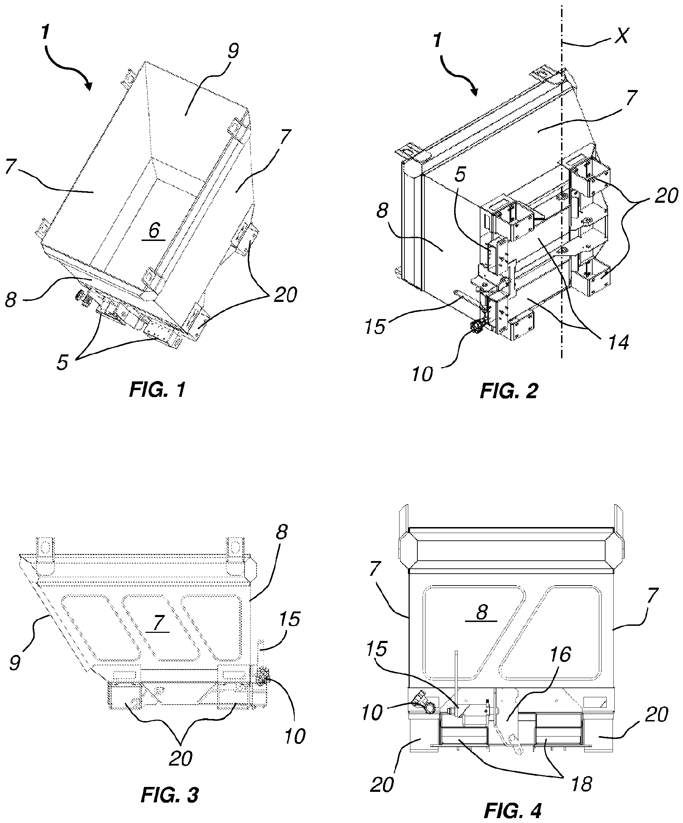

As best shown in FIG. 2, the tipping device 4 comprises a pair of arms 14 substantially parallel and pivoted to the frame 11 about a horizontal tilting axis X to collapse under the frame 11.

Conveniently, one of the arms 14 has an engagement/release lever 15 near a free end for cooperating with a latch 16 fixed to the frame 11.

When the lever 15 is rotated, the latch 16 is released, thereby allowing the frame 11 to tilt about the axis X with respect to the pair of arms 14. The frame 11 is coupled to the case 2, and tilts it, thereby allowing the material contained therein to be dumped.

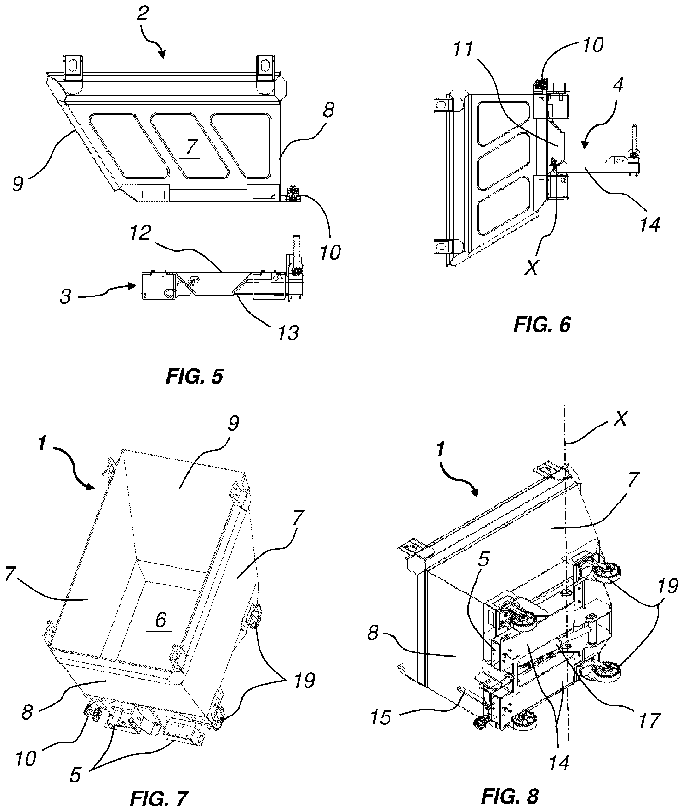

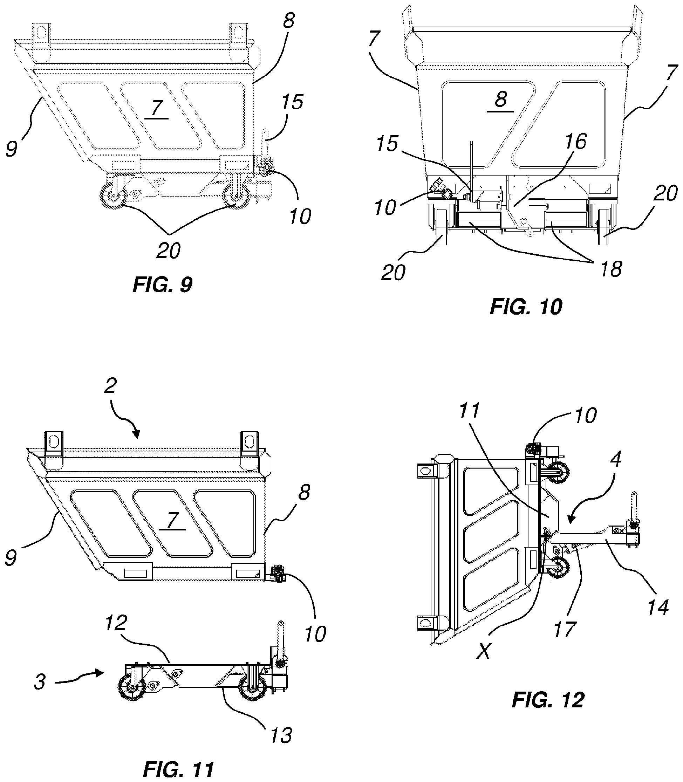

FIGS. 6 and 12 show that the tilting movement can cover an angle of about 90° with respect to the ground.

This characteristic, in addition to the fact of having a case 2 with an inclined front wall 9, ensures complete dumping of any material contained in the case 2.

Advantageously, once the lever 15 has been rotated, it automatically recovers its position, and the case 2 may be easily moved back to the initial position by re-engaging the latch 16 to the arm of the pair 14.

In an alternative embodiment, as shown in FIGS. 7 and 8, the pair of arms 14 are connected to the frame 11 through a hydraulic shock absorber 17 for damping the gravity tilting force, which would otherwise be exerted in a sudden and hazardous manner.

Thus, if the load is heavy, the shock absorber 17 prevents the case 2 from tipping abruptly, with a risk of sudden material dumping toward an operator in the area.

Advantageously, the shock absorber 17 is placed between the pair of arms 14 and does not increase the total volume of the tipping container 1.

Preferably, the pair of arms 14 has a pair of recesses 18 at its free ends for receiving the forklifts of an industrial lifting and transporting vehicle, not shown.

This allows the container 1 to be easily transported inside a work place using a truck or a similar lifting and transporting vehicle provided it is equipped with a forklift.

Also, the use of the truck allows the contents of the case 2 to be also unloaded into a container by simply lifting the container with the forklift above the wall of the container.

When the use of a truck is not allowed due to space restrictions, the tipping container 1 may be easily manually moved by an operator.

This is because the base 3 has pairs of wheels 19 along its lateral edges for supporting and moving the container 1 on the ground.

In a first embodiment, as shown in FIG. 1, the base 3 has pairs of feet 20 along its lateral edges for the container 1 to rest on the ground.

Thus, the container 1 is prevented from moving unintentionally when it is full and is placed on rough or not perfectly level ground.

In a further aspect, the invention relates to a method for compact packaging of a certain number of tipping containers 1.

This method includes an initial step of a) separating the cases 2 from the bases 3 of the tipping containers 1, followed steps of b) stacking the corresponding cases 2 to overlap the respective inclined front walls 9 one on top of the other to form a first stack 21 of cases 2 and c) stacking the corresponding bases 3 to overlap the upper faces 12 on the lower faces 13 and form a second stack 22 of bases 3.

This is followed by a step of d) separately packaging said first 21 and said second 22 stacks on two pallets P₁, P₂ or together on a single pallet P.

Advantageously, the step b) of stacking the bases 3 may be preceded by a step of removing the wheels 19 to reduce the height dimension of the second stack 22.

Furthermore, the second stack 22 of the bases 3 may be introduced beforehand into the highest case 2 of the first stack 21 of cases 2 before closing the package.

Optionally, a stack of pre-assembled tipping containers 1 may be formed by stacking them one inside the other on a single pallet P.

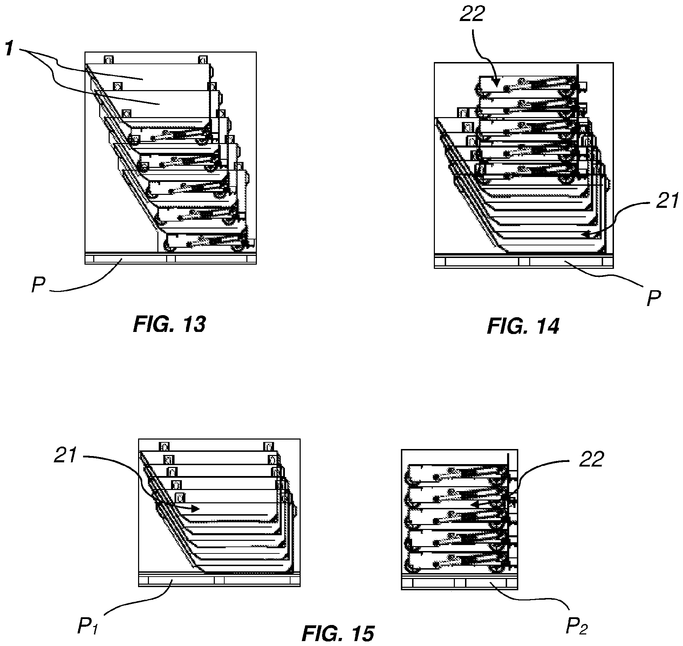

Therefore, it will be understood from FIGS. 13, 14 and 15, that the cases 2 and the bases 3 can be easily stacked with each other, and that the overall volume to be loaded on the pallet P is compact as compared with the number of components to be packaged.

Due to the compact volume of the parts that compose the container 1 of the invention, the amount of packaging material is considerably reduced and easy to load, thereby reducing preparation times, environmental impact and causing an improvement in terms of costs and logistics.

It will be apparent from the above that the tipping container of the invention fulfills the intended objects and namely ensures an excellent ratio of total volume to loading capacity.

In addition, by stacking several containers one on top of the other the space occupied in the work environment is reduced.

Finally, the packaging method as described herein provides considerable advantages in terms of costs and logistics for production and distribution of the container.

While the tipping container has been described with particular reference to the accompanying figures, the numerals referred to in the disclosure and claims are only used for the sake of a better intelligibility of the invention and shall not be intended to limit the claimed scope in any manner.

The same reference numerals in different figures will designate identical or similar elements and the attached figures are not necessarily to scale.

Reference herein to "one embodiment" or "the embodiment" or "some embodiments" indicates that a particular characteristic, structure or element that is being described is included in at least one embodiment of the inventive subject matter.

Furthermore, the particular characteristics, structures or elements may be combined together in any suitable manner to provide one or more embodiments.

### Industrial Applicability

The present invention may find application in industry, because it can be produced on an industrial scale in the field of industrial equipment.

## Claims

1. A tipping container (1) for transport of industrial bulk materials, comprising;
- an open-top case (2) for collecting materials and having a downwardly tapering prismatic shape with a substantially rectangular bottom wall (6), a pair of side walls (7) and a rear wall (8) which are substantially perpendicular to said bottom wall (6) and a front wall (9) inclined with respect to said bottom wall (6) and defining a chute for the materials to be dumped;
- a base (3) designed to support said case and comprising a frame (11) whose plan shape substantially corresponds to that of said bottom wall (6) and with substantially flat and parallel upper (12) and lower (13) faces;
- a tipping device (4) for tilting said container (1) about a substantially horizontal tilting axis (X) to empty its contents;
- removable attachment means (5) for attaching said base (3) to an industrial lifting and transporting vehicle;
wherein said case (2) is adapted to be removably coupled to said base (3) to allow stacking of a certain number of boxes (2) of the same type when separated from their respective bases (3), said frame (11) being adapted to be removably secured to said case (2) by means of universal connection members;
**characterized in that** said bottom wall (6) has a collection chamber defined by a grid for settling and collection of liquid residues, said chamber being equipped with a drain connection (10) with a gate valve for draining the liquid residues, said drain connection (10) projecting from the bottom of the rear wall (8) of the case (2) to allow recovery of both liquid and small solid residues accumulated in said collection chamber.

2. A container as claimed in claim 1, **characterized in that** said tipping device (4) comprises a pair of substantially parallel arms (14) which are pivoted to the frame (11) about a horizontal tilting axis X to collapse under said frame (11).

3. A container as claimed in claim 1, **characterized in that** said pair of arms (14) has a pair of recesses (18) at its free ends for receiving the forklifts of an industrial lifting and transporting vehicle.

4. A container as claimed in claim 1, **characterized in that** one of said arms (14) has an engagement/release lever (15) near a free end for cooperating with a latch (16) fixed on said frame (11).

5. A container as claimed in claim 1, **characterized in that** said base (3) has pairs of feet (20) along its lateral edges for resting on the ground.

6. A container as claimed in claim 1, **characterized in that** said base (3) has pairs of wheels (19) for resting and moving on the ground, along its lateral edges.

7. A container as claimed in claim 2, **characterized in that** said pair of arms (14) is connected to said frame (11) through a hydraulic shock absorber (17) for damping the gravity tilting force.

8. A method for compact packaging a number of tipping containers (1) as claimed in one or more of the preceding claims, comprising the steps of:
a) separating the cases (2) from the bases (3) of the tipping containers (1);
b) stacking the corresponding cases (2) to overlap their respective inclined front walls (9) one on top of the other and form a first stack (21) of cases (2);
c) stacking the corresponding bases (3) to overlap the upper faces (12) on the lower faces (13) and form a compact second stack (22) of bases (3);
d) separately packaging said first (21) and said second (22) stacks on two pallets (P₁, P₂) or together on a single pallet (P);
wherein the step b) of stacking the bases (3) is preceded by a step of removing the wheels (19) to reduce the height dimension of the second stack (22);
wherein said second stack (22) of bases (3) is insertable beforehand into the highest case (2) of the first stack (21) of cases (2) before closing the package;
wherein liquid residues present in the tipping container are collected in a collection chamber;
wherein said chamber is provided with a drain connection (10) with a gate valve for draining the liquid residues;
wherein said drain connection (10) is conformed to project from the bottom of the rear wall (8) of the case (2) to allow recovery of both liquid and small solid residues accumulated in said collection chamber.

## Patentansprüche

1. Ein Kippbehälter (1) für den Transport industrieller Schüttgüter, umfassend:
- ein oben offenes Gehäuse (2) zum Sammeln von Materialien mit einer sich nach unten verjüngenden Prismenform mit einer im Wesentlichen rechteckigen Bodenwand (6), einem Paar Seitenwänden (7) und einer Rückwand (8), die im Wesentlichen senkrecht zur Bodenwand (6) stehen und einer Vorderwand (9), die gegenüber der Bodenwand (6) geneigt ist und eine Rutsche für die abzuladenden Materialien bildet;
- eine Basis (3), die zum Tragen des Gehäuses (2) bestimmt ist und einen Rahmen (11) umfasst, dessen Grundrissform im Wesentlichen der der Bodenwand (6) entspricht und im Wesentlichen flache und parallele obere (12) und untere (13) Flächen aufweist;
- eine Kippvorrichtung (4) zum Kippen des Behälters (1) um eine im Wesentlichen horizontale Kippachse (X), um seinen Inhalt zu entleeren;
- abnehmbare Befestigungsmittel (5) zum Anbringen der Basis (3) an einem industriellen Hebe- und Transportfahrzeug;
wobei der Gehäuse (2) abnehmbar mit der Basis (3) verbunden werden kann, um das Stapeln einer bestimmten Anzahl von Gehäusen (2) des gleichen Typs zu ermöglichen, wenn sie von ihren jeweiligen Basen (3) getrennt sind, wobei der Rahmen (11) angepasst ist, um mittels universeller Verbindungselemente abnehmbar an dem Gehäuse (2) befestigt zu werden;
**dadurch gekennzeichnet, dass** die Bodenwand (6) eine durch ein Gitter definierte Sammelkammer zum Absetzen und Sammeln von Flüssigkeitsrückständen aufweist, wobei die Sammelkammer mit einem Abflussanschluss (10) mit einem Absperrschieber zum Ablassen der Flüssigkeitsrückstände ausgestattet ist, wobei der Ablassanschluss (10) aus der Unterseite der Rückwand (8) des Gehäuses (2) herausragt, um die Rückgewinnung sowohl von Flüssigkeiten als auch von kleinen festen Rückständen zu ermöglichen, die sich in der Auffangkammer angesammelt haben.

2. Behälter nach Anspruch 1, **dadurch gekennzeichnet, dass** die Kippvorrichtung (4) ein Paar im Wesentlichen paralleler Arme (14) umfasst, die am Rahmen (11) um eine horizontale Kippachse X schwenkbar sind, um unter dem Rahmen (11) zusammenzuklappen.

3. Behälter nach Anspruch 2, **dadurch gekennzeichnet, dass** das Armpaar (14) an seinen freien Enden ein Paar Aussparungen (18) zur Aufnahme der Gabelstapler eines industriellen Hebe- und Transportfahrzeugs aufweist.

4. Behälter nach Anspruch 2, **dadurch gekennzeichnet, dass** einer der Arme (14) nahe einem freien Ende einen Eingriffs-/Lösehebel (15) zum Zusammenwirken mit einem am Rahmen (11) befestigten Riegel (16) aufweist.

5. Behälter nach Anspruch 1, **dadurch gekennzeichnet, dass** die Basis (3) entlang ihrer Seitenkanten Paare von Füßen (20) zum Aufstellen auf dem Boden aufweist.

6. Behälter nach Anspruch 1, **dadurch gekennzeichnet, dass** die Basis (3) Paare von Rädern (19) zum Aufstellen und Bewegen auf dem Boden entlang ihrer Seitenkanten aufweist.

7. Behälter nach Anspruch 2, **dadurch gekennzeichnet, dass** das Paar Arme (14) über einen hydraulischen Stoßdämpfer mit dem Rahmen (11) verbunden ist (17) zur Dämpfung der Schwerkraftkippkraft.

8. Verfahren zum kompakten Verpacken einer Anzahl von Kippbehältern (1) nach einem oder mehreren der vorhergehenden Ansprüche, umfassend die Schritte:
a) Trennen des Gehäuses (2) von den Böden (3) der Kippbehälter (1);
b) Stapeln der entsprechenden Kisten (2) so, dass ihre jeweiligen schrägen Vorderwände (9) übereinander liegen und einen ersten Stapel (21) von Kisten (2) bilden;
c) Stapeln der entsprechenden Basen (3), sodass die oberen Flächen (12) auf den unteren Flächen (13) überlappen und ein kompakter zweiter Stapel (22) von Basen (3) entsteht;
d) getrenntes Verpacken des ersten (21) und des zweiten (22) Stapels auf zwei Paletten (P₁, P₂) oder zusammen auf einer einzigen Palette (P);
wobei dem Schritt b) des Stapelns der Sockel (3) ein Schritt des Entfernens der Räder (19) vorangeht, um die Höhenabmessung des zweiten Stapels (22) zu verringern;
wobei der zweite Stapel (22) von Sockeln (3) vor dem Schließen der Verpackung in die höchste Kiste (2) des ersten Stapels (21) von Kisten (2) eingesetzt werden kann;
wobei die im Kippbehälter vorhandene Flüssigkeitsreste in einer Sammelkammer gesammelt werden;
wobei die Sammelkammer mit einem Abflussanschluss (10) mit einem Absperrschieber zum Ablassen der Flüssigkeitsreste versehen ist;
wobei der Ablaufanschluss (10) so ausgebildet ist, dass er vom Boden der Rückwand (8) des Gehäuses (2) vorsteht, um die Rückgewinnung sowohl von Flüssigkeit als auch von kleinen Feststoffrückständen zu ermöglichen, die sich in der Sammelkammer angesammelt haben.

## Revendications

1. Conteneur basculant (1) pour le transport de matériaux industriels en vrac, comprenant :
- un boîtier ouvert (2) pour collecter des matériaux et ayant une forme prismatique effilée vers le bas avec une paroi inférieure sensiblement rectangulaire (6), une paire de parois latérales (7) et une paroi arrière (8) qui sont sensiblement perpendiculaires à ladite une paroi inférieure (6) et une paroi avant (9) inclinée par rapport à ladite paroi inférieure (6) et définissant une goulotte pour les matériaux à déverser ;
- une base (3) conçue pour supporter ledit boîtier (2) et comprenant un cadre (11) dont la forme en plan correspond sensiblement à celle de ladite paroi inférieure (6) et à faces supérieure (12) et inférieure (13) sensiblement planes et parallèles ;
- un dispositif de basculement (4) pour incliner ledit conteneur (1) autour d'un axe d'inclinaison (X) sensiblement horizontal pour vider son contenu;
- des moyens de fixation amovibles (5) pour fixer ladite base (3) à un véhicule industriel de levage et de transport;
dans lequel ledit boîtier (2) est adapté pour être couplé de manière amovible à ladite base (3) pour permettre l'empilage d'un certain nombre de boîtiers (2) du même type lorsqu'elles sont séparées de leurs bases respectives (3), ledit cadre (11) étant adapté pour être fixé de manière amovible audit boîtier (2) au moyen d'éléments de connexion universels;
**caractérisé en ce que** ladite paroi inférieure (6) présente une chambre de collecte délimitée par une grille de décantation et de collecte des résidus liquides, ladite chambre étant équipée d'un raccord de vidange (10) avec un robinet-vanne pour évacuer les résidus liquides, ledit raccord de vidange (10) dépassant du fond de la paroi arrière (8) du boîtier (2) pour permettre la récupération aussi bien des liquides que des petits résidus solides accumulés dans ladite chambre de collecte.

2. Conteneur selon la revendication 1, **caractérisé en ce que** ledit dispositif de basculement (4) comprend une paire de bras sensiblement parallèles (14) qui pivotent sur le châssis (11) autour d'un axe d'inclinaison horizontal X pour s'effondrer sous ledit châssis (11).

3. Conteneur selon la revendication 2, **caractérisé en ce que** ladite paire de bras (14) présente une paire d'évidements (18) à ses extrémités libres pour recevoir les chariots élévateurs d'un véhicule industriel de levage et de transport.

4. Conteneur selon la revendication 2, **caractérisé en ce que** l'un desdits bras (14) comporte un levier d'engagement/déverrouillage (15) à proximité d'une extrémité libre pour coopérer avec un verrou (16) fixé sur ledit cadre (11).

5. Conteneur selon la revendication 1, **caractérisé en ce que** ladite base (3) comporte des paires de pieds (20) le long de ses bords latéraux pour reposer sur le sol.

6. Conteneur selon la revendication 1, **caractérisé en ce que** ladite base (3) comporte des paires de roues (19) pour reposer et se déplacer sur le sol, le long de ses bords latéraux.

7. Conteneur selon la revendication 2, **caractérisé en ce que** ladite paire de bras (14) est reliée audit châssis (11) par l'intermédiaire d'un amortisseur hydraulique (17) pour amortir la force de gravité causée par le basculement.

8. Procédé pour emballer de manière compacte un certain nombre de récipients basculants (1) selon une ou plusieurs des revendications précédentes, comprenant les étapes suivantes:
a) séparer les boîtiers (2) des bases (3) des conteneurs basculants (1);
b) empiler les boîtiers correspondants (2) pour chevaucher leurs parois frontales inclinées (9) les unes sur les autres et former ainsi une première pile (21) de boîtiers (2);
c) empiler les bases correspondantes (3) pour chevaucher les faces supérieures (12) sur les faces inférieures (13) et former une seconde pile compacte (22) de bases (3);
d) emballer séparément lesdites première (21) et seconde (22) piles sur deux palettes (P₁, P₂) ou ensemble sur une seule palette (P);
dans lequel l'étape b) d'empilage des bases (3) est précédée d'une étape de retrait des roues (19) pour réduire la dimension en hauteur de la deuxième pile (22);
dans lequel ladite seconde pile (22) de bases (3) peut être préalablement insérée dans le boîtier le plus haut (2) de la première pile (21) de boîtiers (2) avant de fermer l'emballage;
dans lequel les résidus liquides présents dans le récipient basculant étant collectés dans une chambre de collecte;
dans lequel ladite chambre est dotée d'un raccord de vidange (10) avec un robinet-vanne pour drainer les résidus liquides;
dans lequel ledit raccord de vidange (10) est conformé pour faire saillie depuis le fond de la paroi arrière (8) du boîtier (2) pour permettre la récupération à la fois du liquide et des petits résidus solides accumulés dans ladite chambre de collecte.
